# EUROPEAN PATENT SPECIFICATION

(11) **EP 1 820 550 B1**
(45) Date of publication and mention of the grant of the patent: **22.08.2012**
(21) Application number: 07101664.6
(22) Date of filing: 02.02.2007
(51) Int. Cl.: C02F 1/20, B01D 19/00, C02F 1/34, C02F 1/36

(54) **Method for degassing a liquid as well as degassing device**
Verfahren zur Entgasung einer Flüssigkeit sowie Entgasungsvorrichtung
Procédé de dégazage d'un liquide, et dispositif de dégazage

(30) Priority: 03.02.2006 NL 1031068
(43) Date of publication of application: 22.08.2007
(73) Proprietor: FLAMCO B.V., 2802 AC Gouda (NL)
(72) Inventor: van Cnossen, Jan Henk, 8723 CP, Koudum (NL); Kemper, Dimitri Wasil, 3741 GM, Baarn (NL)
(74) Representative: van Westenbrugge, Andries

(56) References cited:
- EP-A- 1 600 696
- EP-A1- 0 391 484
- WO-A-00/07941
- DE-A1- 10 002 982
- DE-A1- 19 736 671
- US-A- 3 676 983

## Description

The present invention relates to a method for degassing a liquid comprising a gas, such as water, in a cooling or heating system, in which at least part of the liquid is conducted through a section of the cooling/heating system provided with venting means.

The invention also relates to a degassing device for degassing a liquid comprising a gas, such as water, in a cooling or heating system, in which the degassing device comprises:
- a section having a supply duct for the liquid and a discharge duct for the liquid;
- venting means for discharging gas from said section.

A method and degassing device of this type are known, inter alia from EP-933,109.

With the method and device, respectively, according to the invention, as well as with EP-933,109, degassing is achieved by making use of the phenomenon that the solubility of a gas in a liquid decreases when the pressure decreases. In other words, the capacity of a liquid to take up gas increases with increasing pressure. Using this phenomenon, according to EP-933,109, liquid to be degassed is supplied from a system duct to a reduced-pressure vessel (that is to say a vessel with a pressure which is lower than that in the system duct) in order to return the liquid - following degassing - from the reduced-pressure vessel to the system duct. Generally, the drawback of such a method and device, respectively, is that it takes a relatively long time to separate the gas from the liquid. In EP-933,109, the separation of gas is promoted by atomizing the liquid in the vessel by means of a spray nozzle and by conducting the atomized liquid in the vessel past built-in elements promoting degassing, such as grids, deflectors, collision plates, etc. All this is an effort to increase the surface area of the liquid and thus accelerate the desorption of the gas present therein.

The device known from EP-933,109 does indeed add elements which promote degassing and are built into the reduced-pressure vessel, but the effect achieved thereby leaves something to be desired. One of the drawbacks of the device according to EP-933,109 is that the spray nozzle does tend to become soiled and that a control arrangement is necessary in order to ensure that the degassing process proceeds well, which increases the costs.

DE 1000282A discloses a process for degassing a liquid. However, in the known process an additional vibration source is to be provided.

It is an object of the present invention to provide a method and a degassing device as claimed in Claim 1 and Claim 10, respectively, with which a better degassing can be achieved without the need to provide an additional vibration source. With regard to EP-933,109, it is an object of the present invention to provide an alternative solution for improving the degassing, in particular to improve the degassing still further.

This object is achieved according to the invention with a method according to the preamble of Claim 1, in that the liquid is subjected to vibrations in said section, in particular to vibrations in combination with reduced pressure. This object is also achieved in a degassing device as claimed in claim 10, a system as claimed in claim 20 and a unit as claimed in claim 22.

In the context of the present invention, the expression 'in combination with reduced pressure' is understood to mean that at the location where the liquid is made to vibrate, a relatively low pressure or reduced pressure prevails or is generated than prevails in the liquid upstream of said section (i.e. where the liquid originates from). In combination with reduced pressure, it may for example be that the vibration is performed in a so-called reduced-pressure vessel - which forms the so-called section - with a permanently lower pressure than upstream of the reduced-pressure vessel. However, this is also the case if a vibration source contacting the liquid in said section vibrates at such a high frequency that locally, next to the vibration source, a reduced pressure is created as a result of the fact that the liquid in said section reacts more slowly than the vibration source moves, with the pressure in said 'section' then generally substantially remaining the same, at least being able to remain the same as the pressure upsteam of said 'section'. The passage 'in particular to vibrations in combination with reduced pressure' may thus be read as 'in particular to vibrations in combination with reduced pressured relative to the pressure prevailing in the liquid upstream of said section'.

By generating vibrations in the liquid, gas particles are separated from the liquid molecules (so-called microgas or microbubbles) by vibration. Furthermore, as a result of the liquid vibrating, gas particles cannot, or at least much less readily, adhere to surface parts. Gas particles present in the liquid flow upwards in a short period of time and are subsequently discharged by means of venting means. This discharge of gas may take place continuously if the pressure in said section is higher than the atmospheric pressure, or periodically if a pressure lower than atmospheric pressure prevails in said section. Also, other venting means are readily conceivable.

According to a further embodiment of the method according to the invention, the vibrating element is made to vibrate by transferring vibrations produced by a pump, in particular a reciprocating pump, such as a plunger pump, to the vibrating element. Thus, a pump, which is usually already present in systems which use the method according to the invention, is used as vibration source. There is thus no need to provide an additional vibration source. With a heating or cooling system, such a pump may be the customary circulation pump with which the liquid is pumped through the main circuit of the heating or cooling system. However, it may also be another pump with which the liquid is pumped through a subsystem (such as a degassing device connected in parallel with the main circuit) of the heating or cooling system.

According to yet a further embodiment of the method according to the invention, the vibrations have a frequency higher than 40 Hz, such as in the range from 40 to 125 Hz, more particularly in the range from 50 to 60 Hz. The Applicant has found that very good degassing results are achieved at the frequency of the electricity grid, that is to say at frequencies in the range of 50 to 60 Hz. However, good results are also achieved at lower frequencies from approximately 40 Hz, so that the preferred range is therefore 40 to 60 Hz.

However, according to the invention, the vibrations may also have a significantly higher frequency. Thus, the invention provides for a vibration to be used having a frequency which is lower than or equal to approximately 1000 Hz, such as frequencies lower than or equal to approximately 350 Hz.

According to a further embodiment of the method according to the invention, the liquid is subjected to vibrations produced by making a vibrating element vibrate, which vibrating element is situated near said section and contacts the liquid which is present in said section. This vibrating element may, for example, be a panel which is made to vibrate. By placing a vibrating element in the liquid and making said vibrating element vibrate, it is ensured that an effective transfer of vibrations to the liquid takes place.

According to a further embodiment, the vibrating element comprises a tubular body which is at least partly, preferably completely, filled with said liquid, and said tubular body is subjected to vibrations in a direction transverse to the longitudinal direction of said tubular body. Thus, the entire column of liquid which is present in the tubular body is made to vibrate, which improves the transfer of vibration energy.

According to yet a further embodiment of the method according to the invention, it is advantageous if said section comprises a reduced-pressure vessel, with at least part of the liquid being conducted through the reduced-pressure vessel. By means of a reduced-pressure vessel, it is relatively simple to achieve a pressure increase which promotes the separation of gas from the liquid. In the context of the invention, the term reduced-pressure vessel is understood to mean a vessel in which a lower pressure prevails than is the case at the location where the liquid originates from.

In this case, it is furthermore advantageous according to the invention if the vibrating element is in the liquid in the reduced-pressure vessel, and if the liquid is sprayed against the vibrating element upon its introduction into the reduced-pressure vessel. This spraying against the vibrating element may take place above the liquid level in the reduced-pressure vessel. However, the spray nozzle may also be located in the liquid (submerged), so that the liquid is sprayed against the vibrating element at a lower level than the liquid level in the reduced-pressure vessel. In particular, the vibrating element is at least partially, such as completely, submerged in the liquid in the reduced-pressure vessel. This also promoted the release and discharge of gas in liquid which has been present in the reduced-pressure vessel for a relatively long time.

According to another embodiment, the liquid to be introduced may be conducted through a vibrating element, this vibrating element, for example, being a tubular element. This is particularly interesting with a low flow rate of the liquid, since in each case the entire liquid column in the tube shape is made to vibrate. Thus, the transfer of vibration energy to the liquid is maximized.

The abovementioned object according to the invention is furthermore achieved by providing a degassing device as claimed in Claim 10. As has already been explained, this causes gas particles to separate from the liquid molecules by vibration and as a result of the vibration, the gas particles cannot, or at least much less readily, adhere to surfaces.

As has already been explained, it is advantageous according to the invention if the vibrating means comprise a vibrating element which, during use, vibrates and is in contact with the liquid which is present in said section. As has also been already explained above, it is furthermore advantageous if the vibrating element comprises a tubular body which is provided in such a manner that, during use, it is at least partly, preferably completely, filled with the liquid present in said section.

According to the invention, it is furthermore advantageous if the vibrating means are designed to subject the tubular body to vibrations in a direction transverse to the longitudinal direction of said tubular body. Thus, the transfer of vibration energy to the liquid is maximized.

In order to prevent vibrations from the vibrating element from continuing in the surroundings, it is advantageous, according to the invention, if vibration-isolating means are provided between the vibrating element and said section.

According to a further embodiment, the vibrating means are designed to supply a vibration of at least 40 Hz, such as in the range from 50 to 60 Hz. The Applicant has found that even with vibrations at the mains frequency, that is in the range from 50 to 60 Hz, very good results are achieved.

For reasons given above, it is advantageous with the degassing device according to the invention if said section comprises a reduced-pressure vessel, and the degassing device furthermore comprises:
- reducing means provided in the supply duct for reducing the pressure of the liquid to be supplied through the supply duct; and
- pumping means provided in the discharge duct for increasing the pressure of the liquid to be discharged via the discharge duct.

In this case, it is furthermore advantageous if the vibrating means comprise a vibrating element which is provided in the interior of the reduced-pressure vessel. Thus, an effective transfer of vibrations to the liquid is achieved.

According to the invention, it is furthermore advantageous if the supply duct comprises a nozzle opening into the reduced-pressure vessel, which nozzle is directed at the vibrating element. This results in the liquid being supplied to the vessel being sprayed against the vibrating element. As the liquid then hits the vibrating element, a further improved degassing takes place.

According to the invention, it is furthermore advantageous in this case if a nozzle is directed at the inner wall of the tubular body so as to cover the circumference of the inner wall of the tubular body. Thus, a relatively large area of impingement over the circumference of the vessel is achieved.

According to the invention, it is furthermore advantageous if the vibrating means comprise a source for supplying vibrations and if this source comprises the pumping means. The pumping means may, particularly in this case, comprise a reciprocating pump. Thus, the vibrating movement of the pump, such as a reciprocating pump, is used in order to make the vibrating element vibrate. According to the invention, the reciprocating pump is advantageously a plunger pump.

According to a further embodiment of the invention, it is advantageous if said section comprises a tube part having a wall zone provided with passages, the vibrating element being provided on the outside of the tube part and overlapping said wall zone provided with passages. A reduced-pressure vessel and the pump required in order to discharge the reduced-pressure vessel are in this case superfluous. It is sufficient to take a tubular part, create passages in the wall thereof and provide the vibrating element on the outside of the tube which overlaps the passages and limits the liquid flow at the location of the passages. The vibrating element will push and pull on the liquid Locally, reduced-pressure locations will then be generated in the liquid, which cause gas bubbles to separate, which is promoted further by the vibrations.

In this case, it is furthermore advantageous if the vibrating element itself contains the venting means since the vibrating element is made of a liquid-tight, but gas-permeable material. Such a material is known, for example, form NL-1,026,222-C.

In order to ensure sealing as well as vibration isolation, it is in this case, according to the invention, advantageous if the vibrating element is a sleeve surrounding the tube part, and if the axial ends of the sleeve are provided with flexible seals, which attach the sleeve to the tube part in a sealing manner.

The invention furthermore relates to a cooling system or heating system provided with a degassing device according to the invention, the degassing device being connected in parallel with a line part of the heating system. Advantageously, the supply and discharge duct with which the degassing device is connected to the line part in this case comprises a flexible, vibration-damping tube part.

Furthermore, the invention also provides a unit comprising a tube part for incorporation in a pipe system of a heating installation as well as a degassing device according to the invention, in which the discharge duct and the supply duct are both connected to the line part. Assembled beforehand to form a single entity, a unit of this type can easily be installed in a pipe system for a heating installation by the engineer.

In particular, the present invention is very suitable for systems with a closed circuit and a small temperature difference. In addition to, for example, the use in cooling systems, this also encompasses so-called low-temperature heating installations. Such low-temperature heating installations customarily use a float valve for venting. Since, for energy reasons, heating is much reduced, only a small amount of gas is released and degassing can no longer be achieved in a satisfactory manner by means of a simple float valve.

The present invention will be described in more detail below with reference to the two figures below, in which:
Fig. 1 shows a diagrammatic view of the degassing device according to the invention, in which the degasser is in a closed position;
Fig. 2 shows the degassing device according to Fig. 1, but now with the degasser in the open position; and

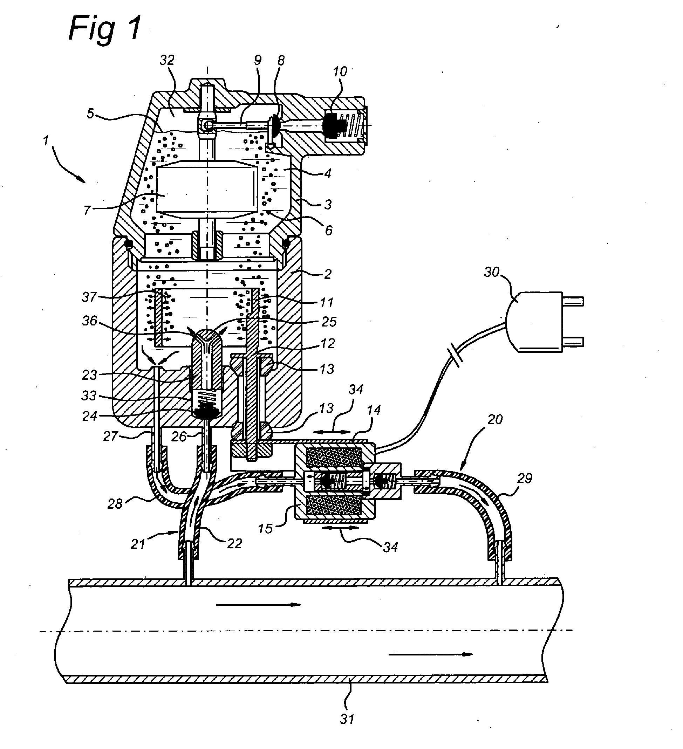

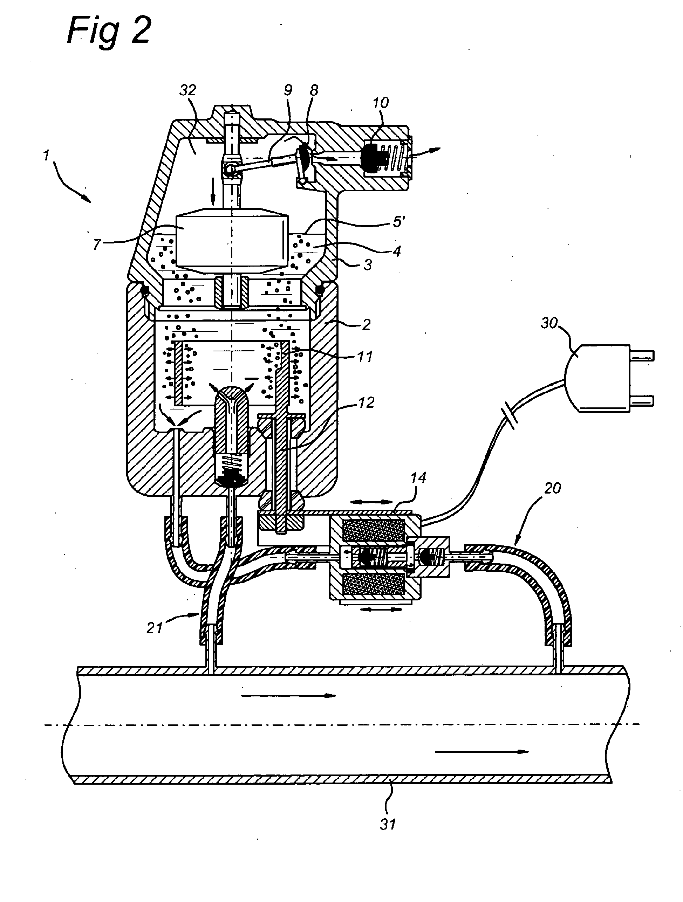

Referring to Figs. 1 and 2, the degassing device according to the invention comprises a reduced-pressure vessel 2, 3 provided with a vent 8, 9, 10, with pressure-reducing means 23, 24, 25, and with a pump 15.

The reduced-pressure vessel is composed of a bottom housing part 2 and a top housing part 3. A reservoir chamber is arranged in the reduced-pressure vessel 2, 3. During use, liquid 4 and gas 32 are present in this reservoir chamber.

The reduced-pressure vessel 2, 3 has a supply duct 21 for supplying liquid, in particular water, to the interior of the reduced-pressure vessel 2,3 and a discharge duct 20 for discharging liquid, in particular water, from the interior of the reduced-pressure vessel 2,3.

In this case, the supply duct comprises a flexible hose 22, a connecting stub 26, a resistance valve 24 and a nozzle 23. The resistance valve 24 is composed of a mushroom-shaped part which is prestressed in the direction of the connecting stub 26 by means of a spring. The spring and the mushroom-shaped part are accommodated in a bore hole 33. By means of said resistance valve a pressure reduction is achieved in the sense that a lower pressure prevails on the downstream side of the valve 24 than on the upstream side. On the upstream side, the pressure prevailing in the main duct 31 prevails and in the reduced-pressure vessel 2, 3 a pressure prevails which is lower than the pressure in the duct 31. This reduction in pressure may, however, also be achieved in other ways, such as for example by means of a throttling member or by suitable design of the nozzle 23.

In this case, the discharge duct of the reduced-pressure vessel consists of a connecting stub 27, a hose 28, a pump 15 and another hose 29. The pump 15 can be connected to an electrical power supply by means of a plug 30. The pump 15 is of the plunger pump type and has one or more plungers which move to and fro in the direction of the double arrow 34. The pump 15 makes it possible to return the liquid from the interior of the reduced-pressure vessel 2, 3, where a relatively low pressure prevails, to the duct 31, where a relatively high pressure prevails.

At the top of the reduced-pressure vessel 2, 3, venting means 7, 8, 9, 10 are provided. The venting means comprise a float 7, which is guided by guides so as to be able to move up and down in the vertical direction, depending on the liquid level 5 (Fig. 1), 5' (Fig. 2). The float 7 operates a shut-off valve 8 via an arm 9. In Fig. 1, the shut-off valve 8 is illustrated in the closed position, whereas in Fig. 2 the open position is illustrated.

When the amount of gas 32 in the interior of the reduced-pressure vessel 2, 3 increases to a certain level, the liquid level 5' will sink to such a degree that the float opens the shut-off valve 8, see Fig. 2. The gas 32 which is under superatmospheric pressure with respect to the surroundings, will then be able to escape from the reduced-pressure vessel 2, 3. In order to prevent the possibility of a situation arising in the reduced-pressure vessel 2, 3 where the valve 8 no longer shuts because the atmospheric pressure forces all the liquid out of the reduced-pressure vessel 2, 3, a valve 10 which is prestressed by a spring is provided in the outlet path of the reduced-pressure vessel 2, 3. It will be clear that, as such, it is also possible to provide other venting means. It is for example possible to use an electronic or computer-controlled venting valve. It is even conceivable to provide a venting pump in order to pump the gas 32 out of the interior of the reduced-pressure vessel 2, 3 if the pressure prevailing in the reduced-pressure vessel is lower than the atmospheric pressure.

According to the invention, vibrating means 11 are provided These vibrating means 11 in this case comprise a cylindrical tube, which is made to vibrate to and fro in a direction parallel to that of the double arrow 34 at the pump. The vibration is thus directed at right angles to the longitudinal centre axis of the cylindrical tube part 11. The discharge end 25 of the nozzle 23 is situated in the interior of the cylindrical tube part 11. The discharge mouths 36 of the nozzle 23 are directed in such a manner that the jet of liquid hits the inside wall 37 of the cylindrical tube part 11.

In order to cause the vibrating element 11 to vibrate, a vibrating arm 12 is provided. This vibrating arm protrudes from the outside to the inside through the bottom housing part 2. In order to isolate the vibrations of the vibrating element 11 from the housing part, vibration isolators 13 are provided These vibration isolators 13 also act as a sealing.

The vibrating arm 12 may, as such, be made to vibrate in various ways. However, according to the invention it is highly advantageous if the vibration which is produced by the plunger pump 15 is used for this purpose. This can be achieved in a simple manner by mounting an arm 14 which extends in an axial direction of the plunger on the housing of the plunger pump 15 and attaching said arm 14 to the vibrating arm 12. Thus, the vibrations of the pump housing resulting from the reciprocating movement of the plunger are transferred to the vibrating element 11. In the case of a single plunger and a vibration of the plunger at the mains frequency of the electricity grid, the vibrating element will likewise vibrate at such a frequency, that is to say at a frequency in the range of 50-60 Hz.

## Claims

1. Method for degassing a liquid comprising a gas, such as water, in a cooling or heating system, in which at least part of the liquid is conducted through a section (2,3) of the cooling/heating system provided with venting means (7,8,9,10), wherein the liquid is subjected to vibrations in said section (2,3), produced by making a vibrating element(11) vibrate, **characterized in that** the vibrating element is made to vibrate by transferring vibrations produced by a feeding pump to the vibrating element (11) via a connecting element (14).

2. Method according to claim 1 in which the liquid is subjected to vibrations in combination with reduced pressure.

3. Method according to claim 1 or claim 2 in which the feeding pump (15) is a reciprocating pump.

4. Method according to one of the preceding claims, in which the vibrations have a frequency higher than 40 Hz, such as in the range from 40 to 60 Hz, more particularly in the range from 50 to 60 Hz..

5. Method according to one of the preceding claims, in which the vibrating element (11; 52) is provided near said section and contacts the liquid which is present in said section.

6. Method according to Claim 5, in which the vibrating element comprises a tubular body (11) which is at least partly, preferably completely, filled with said liquid, and in which said tubular body is subjected to vibrations in a direction (34) transverse to the longitudinal direction of said tubular body (11).

7. Method according to one of the preceding claims, in which said section comprises a reduced-pressure vessel (2,3), through which at least part of the liquid is conducted.

8. Method according to Claim 7, in which the vibrating element (11) is in the liquid in the reduced-pressure vessel (2,3), and in which the liquid is sprayed against the vibrating element (11) upon its introduction into the reduced-pressure vessel.

9. Method according to Claim 7 or 8, in which the vibrating element (11) is at least partially, such as completely, submerged in the liquid in the reduced-pressure vessel (2,3).

10. Degassing device (1) for degassing a liquid comprising a gas, such as water, in a cooling or heating system, in which the degassing device (1) comprises:
a section (2,3) of a vessel having a supply duct (21) for the liquid (4) and a discharge (20) duct for the liquid (4);
venting means (7,8,9,10) for discharging gas (32) from said section (2,3);
in which the degassing device (1) furthermore comprises a vibrating element (11) for subjecting the liquid present in said section (2,3) to vibrations, **characterized in that** the degassing device (1) comprises a feeding pump (15) which supplies vibrations to the vibrating element (11) via a connecting element (14).

11. Degassing device according to Claim 10, in which the vibrating element comprises a tubular body (11), which is provided in such a manner that, during use, it is at least partly, preferably completely, filled with the liquid present in said section (2,3).

12. Degassing device according to Claim 11, in which the vibrating means are designed to subject the tubular body (11) to vibrations in a direction (34) transverse to the longitudinal direction of said tubular body (11).

13. Degassing device according to one of Claims 10-12, in which vibration-isolating means (13) are provided between the vibrating element (11) and the section (2,3).

14. Degassing device according to one of the preceding Claims 10-13, in which the vibrating element (11) are designed to supply a vibration of at least 40 Hz, such as in the range from 40 to 60 Hz, more particularly in the range from 50 to 60 Hz.

15. Degassing device according to one of the preceding Claims 10-14, in which the feeding pump (15) comprises a reciprocating pump or a plunger pump.

16. Degassing device according to one of claims 10-15, in which said section comprises a reduced-pressure vessel (2,3), and in which the degassing device (1) comprises:
pressure reducing means (23,24,36) provided in the supply duct (21) for reducing the pressure of the liquid to be supplied through the supply duct (21); and
the feeding pump (15) is provided in the discharge duct (20) for increasing the pressure of the liquid to be discharged via the discharge duct (20).

17. Degassing device according to Claim 16, in which the vibrating element (11) is provided in the interior of the reduced-pressure vessel (2,3).

18. Degassing device according to Claim 16 or 17, in which the supply duct (21) comprises a nozzle (23) opening into the reduced-pressure vessel, which nozzle (23) is directed at the vibrating element (11).

19. Degassing device according to one of Claims 16-18, in combination with Claim 10, in which the nozzle (23) is directed at the inner wall of the tubular body (11) so as to cover the circumference of the inner wall.

20. Cooling or heating system provided with a degassing device (1) according to one of Claims 10-19, in which the degassing device is connected in parallel with a line part (31) of the heating system.

21. Cooling or heating system according to Claim 20, in which the supply and discharge duct with which the degassing device is connected to the line part (31) comprises a flexible, vibration-damping tube part (21,28,29).

22. Unit comprising:
a tube part for incorporation in a pipe system of a cooling installation or a heating installation; as well as
a degassing device according to one of Claims 10-19; in which the discharge duct and the supply duct are both connected to the line part.

## Patentansprüche

1. Verfahren zum Entgasen einer Flüssigkeit, die ein Gas umfasst, wie beispielsweise Wasser, in einem Kühl- oder Heizsystem, in dem wenigstens ein Teil der Flüssigkeit durch einen Abschnitt (2, 3) des Kühl-/Heizsystems geleitet wird, der mit Entlüftungseinrichtungen (7, 8, 9, 10) versehen ist, wobei die Flüssigkeit in dem Abschnitt (2, 3) Schwingungen ausgesetzt wird, die erzeugt werden, indem ein schwingendes Element (11) in Schwingung versetzt wird, **dadurch gekennzeichnet, dass** das schwingende Element in Schwingung versetzt wird, indem durch eine Speisepumpe erzeugte Schwingungen über ein Verbindungselement (14) auf das schwingende Element (11) übertragen werden.

2. Verfahren nach Anspruch 1, wobei die Flüssigkeit in Kombination mit reduziertem Druck Schwingungen ausgesetzt wird.

3. Verfahren nach Anspruch 1 oder 2, wobei die Speisepumpe (15) eine Hubkolbenpumpe ist.

4. Verfahren nach einem der vorangehenden Ansprüche, wobei die Schwingungen eine Frequenz über 40 Hz, so beispielsweise im Bereich von 40 bis 60 Hz, insbesondere im Bereich von 50 bis 60 Hz, haben.

5. Verfahren nach einem der vorangehenden Ansprüche, wobei das schwingende Element (7, 8, 9, 10) in der Nähe des Abschnitts vorhanden ist und mit der in dem Abschnitt vorhandenen Flüssigkeit in Kontakt ist.

6. Verfahren nach Anspruch 5, wobei das schwingende Element einen röhrenförmigen Körper (11) umfasst, der wenigstens teilweise, vorzugsweise vollständig, mit der Flüssigkeit gefüllt ist , und der röhrenförmige Körper Schwingungen in einer Richtung (34) quer zu der Längsrichtung des röhrenförmigen Körpers (11) ausgesetzt ist.

7. Verfahren nach einem der vorangehenden Ansprüche, wobei der Abschnitt einen Behälter (2, 3) mit reduziertem Druck enthält, durch den wenigstens ein Teil der Flüssigkeit geleitet wird.

8. Verfahren nach Anspruch 7, wobei sich das schwingende Element (11) in der Flüssigkeit in dem Behälter (2, 3) mit reduziertem Druck befindet und die Flüssigkeit bei ihrer Einleitung in den Behälter mit reduziertem Druck auf das schwingende Element (11) gesprüht wird.

9. Verfahren nach Anspruch 7 oder 8, wobei das schwingende Element (11) wenigstens teilweise, beispielsweise vollständig, in der Flüssigkeit in dem Behälter (2, 3) mit reduziertem Druck eingetaucht ist.

10. Entgasungsvorrichtung (1) zum Entgasen einer Flüssigkeit, die Gas umfasst, wie beispielsweise Wasser, in einem Kühl- oder Heizsystem, wobei die Entgasungsvorrichtung (1) umfasst:
einen Abschnitt (2, 3) eines Behälters, der eine Zuflussleitung (21) für die Flüssigkeit (4) und eine Abflussleitung (20) für die Flüssigkeit (4) aufweist;
eine Entlüftungseinrichtung (7, 8, 9, 10) zum Ableiten von Gas (32) aus dem Abschnitt (2, 3);
wobei die Entgasungsvorrichtung (11) des Weiteren ein schwingendes Element (11) umfasst, mit dem die in dem Abschnitt (2, 3) vorhandene Flüssigkeit Schwingungen ausgesetzt wird, **dadurch gekennzeichnet, dass** die Entgasungsvorrichtung (1) eine Speisepumpe (15) umfasst, die dem schwingenden Element (11) über ein Verbindungselement (14) Schwingungen zuführt.

11. Entgasungsvorrichtung nach Anspruch 10, wobei das schwingende Element einen röhrenförmigen Körper (11) umfasst, der so vorhanden ist, dass er in Funktion wenigstens teilweise, vorzugsweise vollständig, mit der in dem Abschnitt (2, 3) vorhandenen Flüssigkeit gefüllt ist.

12. Entgasungsvorrichtung nach Anspruch 10, wobei die schwingende Einrichtung dazu dient, den röhrenförmigen Körper (11) Schwingungen in einer Richtung (34) quer zur Längsrichtung des röhrenförmigen Körpers (11) zu versetzen.

13. Entgasungsvorrichtung nach einem der Ansprüche 10-12, wobei eine schwingungsisolierende Einrichtung (13) zwischen dem schwingenden Element (11) und dem Abschnitt (2, 3) vorhanden ist.

14. Entgasungsvorrichtung nach einem der vorangehenden Ansprüche 10-13, wobei das schwingende Element (13) dazu dient, eine Schwingung von wenigstens 40 Hz, so beispielsweise im Bereich von 40 bis 60 Hz, insbesondere im Bereich von 50 bis 60 Hz, zuzuführen.

15. Entgasungsvorrichtung nach einem der vorangehenden Ansprüche 10-14, wobei die Speisepumpe (15) eine Hubkolbenpumpe oder eine Tauchkolbenpumpe umfasst.

16. Entgasungsvorrichtung nach einem der Ansprüche 10-15, wobei der Abschnitt einen Behälter (2, 3) mit reduziertem Druck umfasst und die Entgasungsvorrichtung (1) umfasst:
eine Druckreduziereinrichtung (23, 24, 36), die in der Zuflussleitung (21) vorhanden ist, um den Druck der über die Zuflussleitung (21) zuzuführenden Flüssigkeit zu reduzieren; und
die Speisepumpe (15) in der Abflussleitung (20) vorhanden ist, um den Druck der über die Abflussleitung (20) abzuführenden Flüssigkeit zu erhöhen.

17. Entgasungsvorrichtung nach Anspruch 16, wobei das schwingende Element (11) im Inneren des Behälters (13) mit reduziertem Druck vorhanden ist.

18. Entgasungsvorrichtung nach Anspruch 16 oder 17, wobei die Zuflussleitung (21) eine Düse (23) umfasst, die sich in den Behälter mit reduziertem Druck hinein öffnet, und die Düse (23) auf das schwingende Element (11) gerichtet ist.

19. Entgasungsvorrichtung nach einem der Ansprüche 16-18 in Kombination mit Anspruch 10, wobei die Düse (23) so auf die Innenwand des röhrenförmigen Körpers (11) gerichtet ist, dass sie den Umfang der Innenwand abdeckt.

20. Kühl- oder Heizsystem, das mit einer Entgasungsvorrichtung (1) nach einem der Ansprüche 10 bis 19 versehen ist, wobei die Entgasungsvorrichtung parallel mit einem Leitungsteil (31) des Heizsystems verbunden ist.

21. Kühl- oder Heizsystem nach Anspruch 20, wobei die Zufluss- und die Abflussleitung, über die die Kühl- oder Heizsystem mit dem Leitungsteil (31) verbunden ist, einen flexiblen, schwingungsdämpfenden Röhrenteil (21, 28, 29) umfassen.

22. Einheit, die umfasst:
einen Röhrenteil zur Integration in ein Rohrsystem einer Kühlanlage oder einer Heizanlage, sowie
ein Kühl- oder Heizsystem nach einem der Ansprüche 10-19, wobei die Abflussleitung und die Zuflussleitung beide mit dem Leitungsteil verbunden sind.

## Revendications

1. Procédé de dégazage d'un liquide comprenant un gaz, tel que l'eau, dans un système de refroidissement ou de chauffage, dans lequel au moins une partie du liquide est conduite à travers une section (2, 3) du système de refroidissement/chauffage doté de moyens de ventilation (7, 8, 9, 10), dans lequel le liquide est soumis à des vibrations dans ladite section (2, 3), produites en faisant vibrer un élément vibrant (11), **caractérisé en ce que** l'élément vibrant est mis en vibration en transférant des vibrations produites par une pompe d'alimentation à l'élément vibrant (11) via un élément de raccordement (14).

2. Procédé selon la revendication 1, dans lequel le liquide est soumis à des vibrations en combinaison avec une pression réduite.

3. Procédé selon la revendication 1 ou la revendication 2, dans lequel la pompe d'alimentation (15) est une pompe à mouvement de va-et-vient.

4. Procédé selon l'une des revendications précédentes, dans lequel les vibrations ont une fréquence supérieure à 40 Hz, telle que dans la plage de 40 à 60 Hz, plus particulièrement dans la plage de 50 à 60 Hz.

5. Procédé selon l'une des revendications précédentes, dans lequel l'élément vibrant (11 ; 52) est agencé à côté de ladite section et est en contact avec le liquide qui est présent dans ladite section.

6. Procédé selon la revendication 5, dans lequel l'élément vibrant comprend un corps tubulaire (11) qui est au moins partiellement, de préférence complètement, rempli dudit liquide, et dans lequel ledit corps tubulaire est soumis à des vibrations dans une direction (34) transversale à la direction longitudinale dudit corps tubulaire (11).

7. Procédé selon l'une des revendications précédentes, dans lequel ladite section comprend une cuve sous pression réduite (2, 3) à travers laquelle au moins une partie du liquide est conduite.

8. Procédé selon la revendication 7, dans lequel l'élément vibrant (11) est dans le liquide dans la cuve sous pression réduite (2, 3), et dans lequel le liquide est pulvérisé contre l'élément vibrant (11) lors de son introduction dans la cuve sous pression réduite.

9. Procédé selon la revendication 7 ou 8, dans lequel l'élément vibrant (11) est au moins partiellement, tel que complètement, submergé dans le liquide dans la cuve sous pression réduite (2, 3).

10. Dispositif de dégazage (1) permettant de dégazer un liquide comprenant un gaz, tel que l'eau, dans un système de refroidissement ou de chauffage, dans lequel le dispositif de dégazage (1) comprend :
une section (2, 3) d'une cuve comportant un conduit de distribution (21) pour le liquide (4) et un conduit d'évacuation (20) pour le liquide (4) ;
des moyens de ventilation (7, 8, 9, 10) pour évacuer le gaz (32) en provenance de ladite section (2 ; 3) ;
dans lequel le dispositif de dégazage (1) comprend en outre un élément vibrant (11) pour soumettre le liquide présent dans ladite section (2, 3) à des vibrations,
**caractérisé en ce que** le dispositif de dégazage (1) comprend une pompe d'alimentation (15) qui communique des vibrations à l'élément vibrant (11) via un élément de raccordement (14).

11. Dispositif de dégazage selon la revendication 10, dans lequel l'élément vibrant comprend un corps tubulaire (11), qui est agencé de telle sorte que, en utilisation, il est au moins en partie, de préférence complètement, rempli du liquide présent dans ladite section (2, 3).

12. Dispositif de dégazage selon la revendication 11, dans lequel les moyens vibrants sont conçus pour soumettre le corps tubulaire (11) à des vibrations dans une direction (34) transversale à la direction longitudinale dudit corps tubulaire (11).

13. Dispositif de dégazage selon l'une des revendications 10 à 12, dans lequel des moyens d'isolation des vibrations (13) sont agencés entre l'élément vibrant (11) et la section (2, 3).

14. Dispositif de dégazage selon l'une des revendications précédentes 10 à 13, dans lequel l'élément vibrant (11) est conçu pour communiquer des vibrations d'au moins 40 Hz telles que dans la plage de 40 à 60 Hz, plus particulièrement dans la plage de 50 à 60 Hz.

15. Dispositif de dégazage selon l'une des revendications précédentes 10 à 14, dans lequel la pompe d'alimentation (15) comprend une pompe à mouvement de va-et-vient ou une pompe à plongeur.

16. Dispositif de dégazage selon l'une des revendications 10 à 15, dans lequel ladite section comprend une cuve sous pression réduite (2, 3), et dans lequel le dispositif de dégazage (1) comprend :
un moyen de réduction de la pression (23, 24, 36) agencé dans le conduit de distribution (21) pour réduire la pression du liquide devant être distribué à travers le conduit de distribution (21) ; et
la pompe d'alimentation (15) est agencée dans le conduit d'évacuation (20) afin d'augmenter la pression du liquide devant être évacué via le conduit d'évacuation (20).

17. Dispositif de dégazage selon la revendication 16, dans lequel l'élément vibrant (11) est agencé à l'intérieur de la cuve sous pression réduite (2, 3).

18. Dispositif de dégazage selon la revendication 16 ou 17, dans lequel le conduit de distribution (21) comprend une buse (23) s'ouvrant dans la cuve sous pression réduite, laquelle buse (23) est dirigée vers l'élément vibrant (11).

19. Dispositif de dégazage selon l'une des revendications 16 à 18, en combinaison avec la revendication 10, dans lequel la buse (23) est dirigée vers la paroi interne du corps tubulaire (11) de façon à couvrir la circonférence de la paroi interne.

20. Système de refroidissement ou de chauffage doté d'un dispositif de dégazage (1) selon l'une des revendications 10 à 19, dans lequel le dispositif de dégazage est raccordé en parallèle avec une partie de conduite (31) du système de chauffage.

21. Système de refroidissement ou de chauffage selon la revendication 20, dans lequel le conduit de distribution et d'évacuation avec lequel le dispositif de dégazage est raccordé à la partie de conduite (31) comprend une partie de tube flexible d'amortissement des vibrations (21, 28, 29).

22. Unité comprenant :
une partie de tube à incorporer dans un système de tuyau d'une installation de refroidissement ou d'une installation de chauffage ; ainsi que un dispositif de dégazage selon l'une des revendications 10 à 19 ; dans laquelle le conduit d'évacuation et le conduit de distribution sont tous deux raccordés à la partie de conduite.
